# EUROPEAN PATENT SPECIFICATION

(11) **EP 1 329 662 B1**
(45) Date of publication and mention of the grant of the patent: **04.01.2006**
(21) Application number: 02027345.4
(22) Date of filing: 07.12.2002
(51) Int. Cl.: F16P 3/14

(54) **Photoelectric safety barrier provided with muting function**
Photoelektrische Sicherheitsgitter mit Muting-Funktion
Barrière de sécurité photoélectrique à fonction de désactivation

(30) Priority: 18.01.2002 IT TO20020009 U
(43) Date of publication of application: 23.07.2003
(73) Proprietor: REER S.p.A., I-10153 Torino (IT)
(72) Inventor: Mirandola, Francesco, 10093 Collegno (TO) (IT); Pedrotto, Guido, 10137 Torino (IT); Pautasso, Carlo, 10024 Moncalieri (TO) (IT)
(74) Representative: Spandonari, Carlo

(56) References cited:
- DE-U- 20 103 828

## Description

### DISCLOSURE

The present invention relates to a photoelectric safety barrier provided with a muting function, particularly for the protection of workers operating in industrial environments around dangerous work areas.

In industrial environments, it is very important to protect workers in service near dangerous tool machines, and sterner and sterner rules are enforced in an attempt to reduce risks for the workers. To this purpose, dangerous areas are shielded by material walls (protective screens, grilles etc.) or immaterial walls such as photoelectric barriers as mentioned in document DE-U-20103828. As well known, such barriers project infrared beams across an entry passage to an area encompassing a dangerous machine and detect any interruption of the beams to generate an alarm signal and stop the machine. Accordingly, a photoelectric barrier comprises a plurality of light emitting diodes (LED) arranged in a diode-holding column located on one side of the passage and generating parallel beams directed to respective photodiodes arranged in a photodiode-holding column located on the other side of the passage. The output signals from the photodiodes are fed to a processing unit which continuously checks them for magnitude and/or duration, in order to establish if any interruption of the signal has occurred. Wide passages can thereby be accurately checked using a fine-combed pattern, so that even very small infringing objects can be detected.

It is, however, necessary to the articles under processing, which can be carried e.g. by means of conveyor belts or automatic-guide vehicles (AGV), as well as certain moving parts of the machine must be allowed to transit through the barrier without triggering the alarm routine and a processing shoutdown. Accordingly, such barriers are commonly provided with a muting function, which temporarily and automatically inhibits the barrier. Mainly, it is desired that the article under processing is allowed to pass freely through the passage controlled by the barrier, when leaving the unsafe area, while, on the other hand, the intrusion of a person gives rise to an immediate stop of the machine.

The above performance is achieved by means of a photoelectric sensor assembly located near said columns, and which usually comprises at least two pairs of light emitters arranged in succession along the path of the pallet on one side of the passage and, on the other side, respective light receivers whose output signals are also fed to the processing unit. The emitters generate signals which intercept the path of the article, so that any interruption of a beam can be interpreted by the processing unit as a muting command for temporarily inhibiting the barrier, the latter being active but "muted" to allow the pallets to transit.

Such sensors can be located to straddle the barrier (T-arrangement) or only on its unsafe side (L-arrangement). Although the T-arrangement enables the barrier to perform a bidirectional check, by also recognizing articles allowed to enter the unsafe area, the L-arrangement is preferred, because it avoids that the barrier encumbers the area outside the unsafe area with obstructions, even if it only performs a unidirectional check (disabling the barrier only when the pallets leave the unsafe area) and, moreover, is more vulnerable.

In fact, with the L-arrangement, the muting function is enabled when the muting sensors intercept the pallet, and is disabled when the barrier is freed. Therefore, if the barrier is not freed, the muting function will persist indefinitely; there is therefore a serious hazard of tampering by operators who may try to enter the unsafe area by deceiving the protection provided by the barrier (e.g. by artfully obstructing the field protected by the barrier only, which field is adjacent to the safe area and easily accessible). Also, a breakdown of an optical beam, during barrier muting, would cause system malfunction by inhibiting the ending of muting function throughout the breakdown period. Similarly, a breakdown of the muting sensor supply would be interpreted by the processing unit as a muting command, so that the protective action of the system would be permanently inhibited.

Therefore, a main object of the present invention is to provide a photoelectric security barrier provided with a muting function having a higher degree of safety than the known barriers, without encumbering the area outside the unsafe area with any obstructions.

The above-mentioned object as well as other objects and advantages, such as will appear from the following description, are achieved by the invention with a photoelectric security barrier provided with muting function having the features recited in claim 1, while the other claims state other advantageous features of the invention.

The invention will now be described in more detail, with reference to the attached drawings, shown by way of nonlimiting example, wherein:
Fig. 1 is a perspective view of a photoelectric barrier according to the invention and of an approaching pallet, carried on a partly shown conveyor belt;
Figs. 2 and 3 are two diagrams showing the operative logic of the photoelectric barrier in two possible operative conditions;
Figs. 4a, 4b are diagrammatical side and plan views, showing a pallet differently shaped from the pallet of Fig. 1, about to exit the barrier;
Fig. 5 shows the wiring diagram of an additional protection device guarding from breakdowns of the muting sensor supply system.

With reference to the drawings, a photoelectric barrier 10 comprises a plurality of light emitting diodes (LED), supported on a diode-bearing column 12 located at one side of a passage 13 on the perimeter 11 of an unsafe area 25, which generate parallel beams 14 (usually 2 to 200 beams, depending on the requirements) which are detected by respective photodiodes supported on a photodiode-bearer column 16 located at the opposite side of passage 13. Each column 12, 16 may be an extruded aluminum channel, while the emitting diodes or photodiodes may be protected by semitransparent, longitudinally extending optical windows, e.g. made of PMMA. The output signals from the photodiodes are fed to a processing unit UE, whose function will be described below, wherein they are processed, instant-by-instant in order to establish if any interruption of the signal, and then any violation, occurred. Particularly, the diodes generate a sequence of light impulses, which are differently spaced each other, in order to generate a code that the receiving unit of processing unit UE is able to recognize, so that such signals can be recognized among any other signal generated by external interference sources.

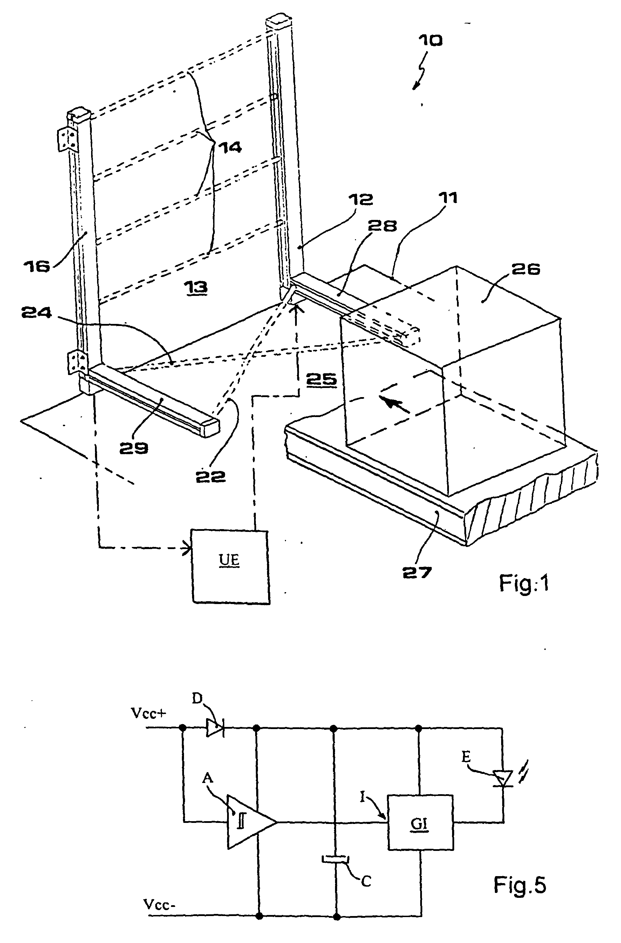

Photoelectric barrier 10 is provided with a muting function, whose detecting area is implemented by a photoelectric sensor assembly arranged near said columns 12, 16. Such sensors comprise a pair of light emitters, which are arranged in succession at one side of passage 13, along the path of a pallet 26 carried by a conveyor belt 27 as diagrammed in Fig. 1, and are supported by an emitter-bearing bracket 28, which is perpendicularly attached to column 12 or 16 (column 12 in Fig. 1) and extends towards the unsafe area 25. Respective light receivers, whose output signals are fed to processing unit UE, are supported on a receiver-bearing bracket 29 which is perpendicularly attached to the other column 16 or 12 (column 16 in Fig. 1) and is parallel to bracket 28. Both sensors of the embodiment of Fig. 1 are located on the side of unsafe area 25 (L-arrangement), so that the emitters generate beams 22, 24 intercepting the path of the pallet leaving such area. In the preferred embodiment, the sensors are so arranged that beams 22, 24 are X-oriented on the horizontal plane, although it will be obvious for a person skilled in the art that other convenient arrangements are possible within the teachings of the invention.

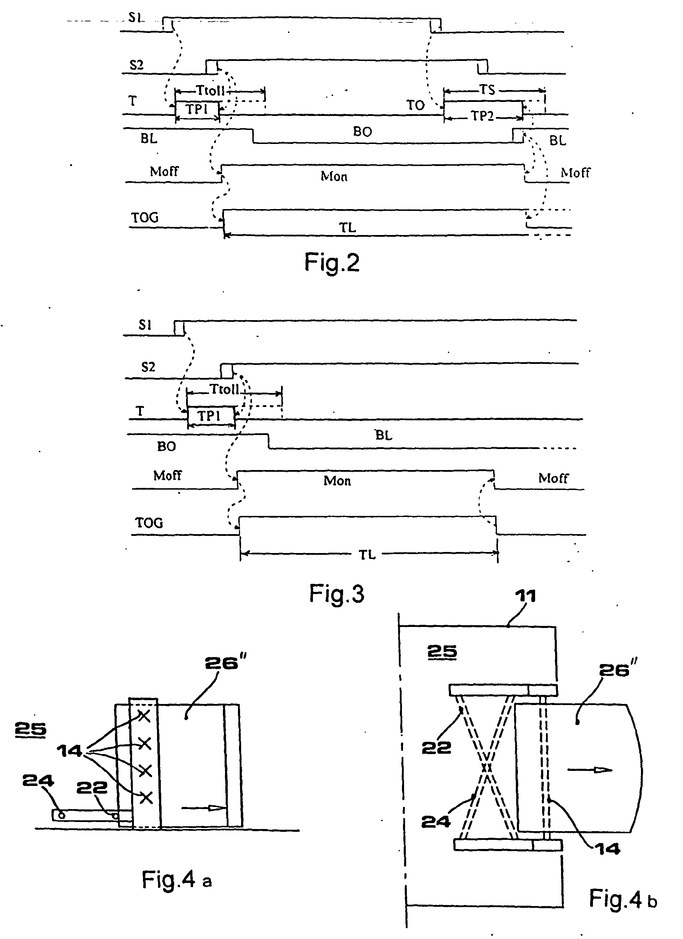

The operative logic, shown in diagrams of Figs. 2 and 3, is described below.

Starting with the condition of Fig. 2, when the first beam, e.g. beam 22 of Fig. 1, is intercepted by pallet 26, a signal S1 is generated by the corresponding sensor, which triggers a timer T measuring an entry time interval TP1, from the break of such first beam 22 to the break of second beam 24, as detected by a respective signal S2 generated by the second sensor. If entry time interval TP1 is shorter than a predetermined tolerance time interval Ttoll, e.g. four seconds, the processing unit enables the muting function which is switched from Moff to Mon, and the barrier is muted. By means of such first tolerance time interval Ttoll, which would be superfluous in the ideal situation of a prismatic, symmetrical pallet, moving in alignment to its path, the system is adjusted to the real circumstances where the pallet may be asymmetrical and can move obliquely, and not in alignment, with respect to its path, so that it does not intercept both beams 22 and 24 simultaneously.

Subsequently, the pallet will transit through passage 13, thereby breaking beams 14 and switching their signal from a free-barrier signal BL to an engaged-barrier signal BO, which, however, is not effective because it is bypassed by signal Mon. In the situation of Fig. 2, which is diagrammed in Figs. 4a, 4b, when the first beam 22 is restored, passage 13 is still engaged by pallet 26". At this point, a time-out TO will be enabled by processing unit UE to measure the time interval TP2 required by pallet 26 for disengaging passage 13. If such time TP2 is shorter than a predetermined second tolerance time interval TS, e.g. four seconds, the muting function will be disabled by the processing unit and the barrier protection function will be restored (Moff). However, if the passage is still busy at the end of such time interval TS, because of any anomalies, the muting function (Moff) will be disabled by processing unit UE, the barrier protection function will be restored and the tool machine will be stopped.

The system also comprises a general time-out TOG, which is enabled when the first beam 22 is broken and measures a time limit TL, e.g. in the range 30 seconds to 25 minutes, at whose expiry the muting will be disabled (Mon to Moff, Fig. 3). On the other side, if situation of Fig. 2 occurs, the processing unit will reset the count of general time-out TOG when Moff rises.

Fig. 5 shows the wiring diagram of an additional protection device, which is convenient but not essential to implement the present invention, against any breakdown of the muting sensor supply. In fact, any breakdown of the supply, e.g. due to a cut wire, would be interpreted by the processing unit as a pallet detection signal, so that the muting function would be enabled (Mon) and would be active until the expiry of time interval TOG. Such condition would give rise to a dangerous situation because passage 13 would be unprotected for a long time. In the diagram of Fig. 5, the high output of a comparator A is connected to the input I of a pulse generator GI, which is connected to an emitter E of a muting sensor. If the line voltage is active, signal Rif will keep comparator A at ON status and pulse generator GI will operate normally. If, because of a breakdown, the line voltage Vcc+ or Vcc- is cut off, comparator A will be switched OFF, thereby enabling the pulse generator to transmit an alarm code for a time depending on the size of a capacitor C, which is connected for discharging into pulse generator GI. Such time (e.g. 100 ms) must be sufficient for the muting receivers to recognize the alarm code. As soon as such code is recognized, the barrier output is switched OFF causing the machine to stop. A decoupling diode D prevents the capacitor from discharging across the supply circuit.

A further embodiment can be implemented in order to prevent any operator, when timer TO is on, from intentionally obscuring the barrier beams (e.g. by shrouding them with a hand), after the pallet has left the barrier, in order to use the rest of time interval TS for entering the unsafe area 25. Therefore, a control can be implemented so that, after a time TM from each muting beam restoring, further switching of the muting sensor will be not accepted, until the time interval TS has elapsed. Accordingly, if an operator tries to enter the unsafe area 25 during the time elapsing between the muting sensor leaving and the expiry of time TS, the muting sensors will be switched for a second time.

It can be seen that the invention solves the stated problem, by providing a photoelectric barrier provided with muting function with L-arranged muting sensors, which offers a higher degree of safety than the known ones, as a result of the combined action of a timer and two time-outs, which drastically reduces the risks for the operator, by providing a quick restore of the barrier after the transit of the article authorized to pass through it.

## Claims

1. A photoelectric barrier comprising a plurality of light emitting diodes arranged in a diode-bearing column (12) located at one side of a passage (13), and generating parallel beams (14) for detection by respective photodiodes arranged in a photodiode-bearing column (16) located at the opposite side of the passage (13), and whose output signals are fed to a processing unit (UE); the barrier (10) also comprising photoelectric sensors arranged near said columns (12, 16) inside an unsafe area (25) and comprising at least a pair of light emitters, which are arranged in succession at one side of the passage (13) along the path of an article passing through the passage (13), and generate beams (22, 24) detected by a pair of respective light receivers, which are located at the opposite side of the passage (13), and whose output signals are fed to said processing unit (UE), **characterized in that** the processing unit (UE) comprises:
- timing means (T) for measuring an entry time interval (TP1) running from the break of a first beam (22), caused by the transit of the article through the passage (13), to the break of a second beam (24), and matching said entry time interval (TP1) with a first predetermined tolerance time (Ttoll), in order to issue a barrier muting signal whenever such entry time interval (TP1) is shorter than said first tolerance time (Ttoll),
- exit time-out means (TO) for controlling an exit time interval (TP2) running from the restoring of the first beam (22) to the disengagement of the passage (13), and for issuing a muting-disabling, barrier-restoring command whenever such exit time interval (TP2) is longer than a predetermined second tolerance time interval (TS),
- general time-out means (TOG), which is enabled by the muting signal is issued, for counting a time limit (TL) at whose expiry the muting signal is disabled and the barrier (10) is restored, the processing unit (UE) resetting the count of said general timeout (TOG) in case the barrier (10) is disengaged within said time limit (TL).

2. The photoelectric barrier of claim 1, **characterized in that** said photoelectric sensors are arranged for projecting said beams (22, 24) in an X-orientation on the horizontal plane.

3. The photoelectric barrier of claim 1 or 2, **characterized in that** said light emitters are supported by an emitter-bearing bracket (28) and said light receivers are supported by a receiver-bearing bracket (29), each one of said brackets being attached at right angles to one of said columns and extending into the unsafe area (25).

4. The photoelectric barrier of any of the preceding claims, **characterized in that** said light emitting diodes generate a sequence of light pulses forming an identification code which is decodable by the processing unit (UE).

5. The photoelectric barrier of claim 1, **characterized in that** it comprises a protection device including a comparator (A) at whose output is connected the input (I) of a pulse generator (GI), which is connected to an emitter (E) of at least one of said muting sensors, said comparator (A) being switched off whenever the line voltage (Vcc+, Vcc-) is cut off, thereby enabling said pulse generator (GI) to transmit an alarm code for a time interval sufficient for the muting receivers to recognize the alarm code, said time interval being dependent on the size of a capacitor (C), connected for discharging into the generator (GI), the recognition of such signal switching off the barrier (10).

6. The photoelectric barrier of claim 1, **characterized in that** it comprises a control for preventing further switching of the muting sensor until the expiry of said second tolerance time interval (TS), after a predetermined time from each muting beam restoring.

7. The photoelectric barrier of any of the preceding claims, **characterized in that** said entry time (TP1) is four seconds.

8. The photoelectric barrier of any of the preceding claims, **characterized in that** said exit time interval (TP") is four seconds.

9. The photoelectric barrier of any of the preceding claims, **characterized in that** said time limit (TL) is adjustable in the range 30 seconds to 15 minutes.

## Patentansprüche

1. Fotoelektrisches Sicherheitsgitter umfassend eine Mehrzahl von lichtemittierenden Dioden, die in einer sich auf einer Seite einer Passage (13) befindenden diodentragenden Säule (12) angeordnet sind und parallele Strahlen erzeugen (14) zum Nachweis durch jeweilige Fotodioden, die in einer auf der gegenüberliegenden Seite der Passage (13) befindlichen fotodiodentragenden Säule (16) angeordnet sind, deren Ausgangssignale in eine Verarbeitungseinheit (UE) eingespeist werden; wobei das Sicherheitsgitter (10) außerdem nahe den Säulen (12, 16) innerhalb eines unsicheren Bereiches (25) angeordnete fotoelektrische Sensoren umfasst und mindestens ein Paar von Lichtemittern aufweist, die aufeinanderfolgend an einer Seite der Passage (13) entlang des Weges eines durch die Passage (13) hindurchtretenden Gegenstands angeordnet sind und Strahlen (22, 24) erzeugen, die durch ein Paar zugehöriger Lichtempfänger nachgewiesen werden, die sich auf der gegenüberliegenden Seite der Passage (13) befinden und deren Ausgangssignale in die Verarbeitungseinheit (UE) eingespeist werden, **dadurch gekennzeichnet, dass** die Verarbeitungseinheit (UE) umfasst:
- Zeitmessmittel (T) zum Messen eines Eingangszeitintervalls (TP1), das von der Unterbrechung eines ersten Strahls (22), verursacht durch den Transit des Gegenstands durch die Passage (13), bis zur Unterbrechung eines zweiten Strahls (24) dauert, und zum Vergleichen des Eingangszeitintervalls (TP1) mit einer ersten vorbestimmten Toleranzzeit (Ttoll), um ein Sicherheitsgitter-Muting-Signal immer dann auszugeben, wenn solch ein Eingangszeitintervall (TP1) kürzer ist als die erste Toleranzzeit (Ttoll),
- Ausgangsunterbrechungsmittel (TO) zum Kontrollieren eines Ausgangszeitintervalls (TP2), das von der Wiederherstellung des ersten Strahls (22) bis zur Auslösung der Passage (13) andauert, und zum Ausgeben eines Kommandos zum Sperren des Mutings und Wiederherstellen des Sicherheitsgitters immer dann, wenn ein solches Ausgangszeitintervall (TP2) länger ist als ein vorbestimmtes zweites Toleranzzeitintervall (TS),
- allgemeine Unterbrechungsmittel (TOG), um ein Zeitlimit (TL) abzuzählen, bei dessen Ablauf das Mutingsignal deaktiviert und das Sicherheitsgitter (10) wiederhergestellt wird, die dadurch aktiviert werden, dass das Mutingsignal ausgegeben wird, wobei die Verarbeitungseinheit (UE) den Zähler der allgemeinen Unterbrechung (TOG) für den Fall, dass das Sicherheitsgitter (10) innerhalb des Zeitlimits (TL) ausgelöst wird, zurücksetzt.

2. Fotoelektrisches Sicherheitsgitter nach Anspruch 1, **dadurch gekennzeichnet, dass** die fotoelektrischen Sensoren so angeordnet sind, das sie die Strahlen (22, 24) in einer X-Orientierung auf der horizontalen Ebene projizieren.

3. Fotoelektrisches Sicherheitsgitter nach Anspruch 1 oder 2, **dadurch gekennzeichnet, dass** die Lichtemitter durch einen emittertragenden Halter (28) gehalten werden und die Lichtempfänger durch einen empfängertragenden Halter (29) gehalten werden, wobei jeder der Halter rechtwinklig zu einer der Säulen angebracht ist und sich in den unsicheren Bereich (25) erstreckt.

4. Fotoelektrisches Sicherheitsgitter nach einem der vorhergehenden Ansprüche, **dadurch gekennzeichnet, dass** die lichtemittierenden Dioden eine Sequenz von Lichtpulsen erzeugen, die einen Identifikationscode bilden, der durch die Verarbeitungseinheit (UE) decodiert werden kann.

5. Fotoelektrisches Sicherheitsgitter nach Anspruch 1, **dadurch gekennzeichnet, dass** es ein Schutzgerät umfasst, das einen Komparator (A) aufweist, an dessen Ausgang der Eingang (I) eines Pulsgenerators (GI) angeschlossen ist, der mit einem Emitter (E) mindestens einer der Mutingsensoren verbunden ist, wobei der Komparator (A) immer dann abgeschaltet wird, wenn die Netzspannung (Vcc+, Vcc-) unterbrochen wird, wodurch der Pulsgenerator (GI) aktiviert wird, um einen Alarmcode für ein Zeitintervall zu senden, das für die Mutingempfänger ausreicht, den Alarmcode zu erkennen, wobei das Zeitintervall von der Größe eines Kondensators (C) abhängig ist, der zum Entladen in den Generator (GI) angeschlossen ist, und wobei das Erkennen eines solchen Signals das Sicherheitsgitter (10) abschaltet.

6. Fotoelektrisches Sicherheitsgitter nach Anspruch 1, **dadurch gekennzeichnet, dass** es eine Steuereinrichtung umfasst, die ein weiteres Schalten des Mutingsensors nach einer vorbestimmten Zeit nach jedem Mutingstrahl-Wiederherstellen bis zum Ablauf des zweiten Toleranzzeitintervalls (TS) verhindert.

7. Fotoelektrisches Sicherheitsgitter nach einem der vorhergehenden Ansprüchen, **dadurch gekennzeichnet, dass** die Eingangszeit (TP1) 4 Sekunden beträgt.

8. Fotoelektrisches Sicherheitsgitter nach einem der vorhergehenden Ansprüche, **dadurch gekennzeichnet, dass** das Ausgangszeitintervall (TP2) 4 Sekunden beträgt.

9. Fotoelektrisches Sicherheitsgitter nach einem der vorhergehenden Ansprüche, **dadurch gekennzeichnet, dass** das Zeitlimit (TL) in dem Bereich von 30 Sekunden bis 15 Minuten einstellbar ist.

## Revendications

1. Barrière photoélectrique comportant une pluralité de diodes électroluminescentes agencées dans une colonne de support de diodes (12) située sur un côté d'un passage (13), et générant des faisceaux parallèles (14) pour une détection par des photodiodes respectives agencées dans une colonne de support de photodiodes (16) située sur le côté opposé du passage (13), et dont les signaux de sortie sont transférés à une unité de traitement (UE) ; la barrière (10) comportant également des capteurs photoélectriques agencés à proximité desdites colonnes (12, 16) à l'intérieur d'une zone dangereuse (25) et comportant au moins une paire d'émetteurs de lumière, qui sont agencés à la suite sur un côté du passage (13) le long du trajet d'un article traversant le passage (13), et génèrent des faisceaux (22, 24) détectés par une paire de récepteurs de lumière respectifs, qui sont situés sur le côté opposé du passage (13), et dont les signaux de sortie sont transférés à ladite unité de traitement (UE), **caractérisée en ce que** l'unité de traitement (UE) comporte :
- des moyens de minutage (T) pour mesurer un intervalle de temps d'entrée (TP1) s'étendant de la rupture d'un premier faisceau (22), provoquée par le déplacement de l'article à travers le passage (13), à la rupture d'un second faisceau (24), et comparer ledit intervalle de temps d'entrée (TP1) à un premier temps de tolérance prédéterminé (Ttoll), afin d'émettre un signal d'inhibition de barrière à chaque fois que cet intervalle de temps d'entrée (TP1) est plus court que ledit premier temps de tolérance (Ttoll),
- des moyens de délai de sortie (TO) pour commander un intervalle de temps de sortie (TP2) s'étendant de la restauration du premier faisceau (22) à la libération du passage (13), et pour émettre une instruction de restauration de barrière, invalidant l'inhibition, à chaque fois que cet intervalle de temps de sortie (TP2) est plus long qu'un second intervalle de temps de tolérance prédéterminé (TS),
- des moyens de délai général (TOG), qui sont activés par émission du signal d'inhibition, pour compter une limite de temps (TL) à l'expiration de laquelle le signal d'inhibition est invalidé et la barrière (10) est restaurée, l'unité de traitement (UE) réinitialisant le compte dudit délai général (TOG) dans le cas où la barrière (10) est libérée dans ladite limite de temps (TL).

2. Barrière photoélectrique selon la revendication 1, **caractérisée en ce que** lesdits capteurs photoélectriques sont agencés pour projeter lesdits faisceaux (22, 24) selon une orientation de X sur le plan horizontal.

3. Barrière photoélectrique selon la revendication 1 ou 2, **caractérisée en ce que** lesdits émetteurs de lumière sont supportés par un étrier de support d'émetteurs (28) et lesdits récepteurs de lumière sont supportés par un étrier de support de récepteurs (29), chacun desdits étriers étant fixé à angle droit à l'une desdites colonnes et s'étendant dans la surface dangereuse (25).

4. Barrière photoélectrique selon l'une quelconque des revendications précédentes, **caractérisée en ce que** lesdites diodes électroluminescentes génèrent une séquence d'impulsions lumineuses formant un code d'identification qui peut être décodé par l'unité de traitement (UE).

5. Barrière photoélectrique selon la revendication 1, **caractérisée en ce qu'**elle comporte un dispositif de protection incluant un comparateur (A) à la sortie duquel est connectée l'entrée (I) d'un générateur d'impulsions (GI), qui est connecté à un émetteur (E) d'au moins un desdits capteurs d'inhibition, ledit comparateur (A) étant mis hors tension à chaque fois que la tension de secteur (Vcc+, Vcc-) est coupée, de manière à permettre audit générateur d'impulsions (GI) de transmettre un code d'alarme pendant un intervalle de temps suffisant pour que les récepteurs d'inhibition reconnaissent le code d'alarme, ledit intervalle de temps étant fonction de la taille d'un condensateur (C), connecté pour une décharge dans le générateur (GI), la reconnaissance d'un tel signal mettant hors tension la barrière (10).

6. Barrière photoélectrique selon la revendication 1, **caractérisée en ce qu'**elle comporte une commande pour empêcher une commutation supplémentaire du capteur d'inhibition jusqu'à l'expiration dudit second intervalle de temps de tolérance (TS), après un temps prédéterminé depuis la restauration de chaque faisceau d'inhibition.

7. Barrière photoélectrique selon l'une quelconque des revendications précédentes, **caractérisée en ce que** ledit temps d'entrée (TP1) est de quatre secondes.

8. Barrière photoélectrique selon l'une quelconque des revendications précédentes, **caractérisée en ce que** ledit intervalle de temps de sortie (TP2) est de quatre secondes.

9. Barrière photoélectrique selon l'une quelconque des revendications précédentes, **caractérisée en ce que** ladite limite de temps (TL) est ajustable dans la plage de 30 secondes à 15 minutes.
